# EUROPÄISCHE PATENTSCHRIFT

(11) **EP 1 474 227 B1**
(45) Veröffentlichungstag und Bekanntmachung des Hinweises auf die Patenterteilung: **16.11.2005**
(21) Anmeldenummer: 03739385.7
(22) Anmeldetag: 10.02.2003
(51) Int. Cl.: B01J 8/24, B01J 8/44, C21B 13/00, B08B 7/02, B08B 9/00

(54) **VERTEILERBODEN ZUR VERTEILUNG EINES MIT FEINEN FESTSTOFFPARTIKELN BELADENEN GASES**
DISTRIBUTOR BOTTOM FOR THE DISTRIBUTION OF A GAS CHARGED WITH FINE SOLID PARTICLES
FOND DE DISTRIBUTION SERVANT A DISTRIBUER UN GAZ CHARGE DE PARTICULES SOLIDES

(30) Priorität: 14.02.2002 AT 2352002
(43) Veröffentlichungstag der Anmeldung: 10.11.2004
(73) Patentinhaber: Voest-Alpine Industrieanlagenbau GmbH & Co., 4031 Linz (AT); POHANG IRON & STEEL CO., LTD., Pohang-City 790-785 (KR); Research Institute of Industrial Science and Technology, Incorporated Foundation, Pohang City 790-330 (KR)
(72) Erfinder: HAUZENBERGER, Franz, A-4030 Linz (AT)
(74) Vertreter: VA TECH Patente GmbH & Co
(86) Internationale Anmeldenummer: PCT/EP2003/001279
(87) Internationale Veröffentlichungsnummer: WO 2003/068380

(56) Entgegenhaltungen:
- GB-A- 974 728
- US-B1- 6 293 735
- PATENT ABSTRACTS OF JAPAN vol. 016, no. 419 (C-0981), 3. September 1992 (1992-09-03) & JP 04 144917 A (ISHIHARA SANGYO KAISHA LTD), 19. Mai 1992 (1992-05-19)
- DATABASE WPI Section Ch, Week 200274 Derwent Publications Ltd., London, GB; Class M24, AN 2002-688603 XP002244025 & KR 2002 037 971 A (POSCO), 23. Mai 2002 (2002-05-23)

## Beschreibung

Die Erfindung betrifft einen Verteilerboden, insbesondere Düsenverteilerboden, zur Verteilung eines mit feinen Feststoffpartikeln beladenen Gases, vorzugsweise zur Verwendung in einem Wirbelbettaggregat, insbesondere zur Reduktion von metalloxidhältigen Feststoffpartikeln, wobei an dem Verteilerboden zumindest eine bewegliche Reinigungseinrichtung angeordnet ist, die es ermöglicht, während des Betriebes des Verteilerbodens die Bildung von Ablagerungen an dem Verteilerboden, insbesondere an den Düsen eines Düsenverteilerbodens, zu verringern und/oder bereits gebildete Anlagerungen zumindest teilweise zu entfernen. Die Erfindung betrifft weiters ein Verfahren zur Verringerung der Bildung von Anlagerungen und/oder zur zumindest teilweisen Entfernung von Anlagerungen an einem Verteilerboden.

Aus der Veröffentlichung EP0444614A2 ist dem Fachmann bekannt einen Düsenverteilerboden durch eine bewegliche Reinigungseinrichtung von Anlagerungen zu befreien. Die gelehrte Anlage sowie das gelehrte Verfahren erweisen sich in der Praxis als aufwendig und erfordern einen hohen technischen wie auch finanziellen Aufwand.

Es ist deshalb eine Aufgabe der vorliegenden Erfindung eine Vorrichtung nach dem Oberbegriff des Anspruchs 1, sowie ein Verfahren nach dem Oberbegriff des Anspruchs 5 weiter zu entwickeln, wodurch ein wirtschaftliches und zuverlässiges Verfahren sowie eine entsprechende Vorrichtung verwirklicht werden kann.

Diese Aufgabe wird erfindungsgemäß entsprechend dem erfindungsgemäßen Vorrichtung gemäß dem kennzeichnenden Teil des Anspruchs 1, sowie entsprechend dem erfindungsgemäßen Verfahren gemäß dem kennzeichnenden Teil des Anspruchs 5 gelöst.

Dadurch, dass die Reinigungseinrichtung ein Mittel zur Reinigung des Verteilerbodens durch eine unmittelbare mechanische, insbesondere schlagende, Einwirkung auf den Verteilerboden, insbesondere auf die Düsen eines Düsenverteilerbodens, aufweist, ist eine einfache und zweckmäßige Reinigung des Düsenverteilerbodens gewährleistet.

Nach einer besonderen Ausführungsform der erfindungsgemäßen Vorrichtung ist das Mittel zur Reinigung des Verteilerbodens derart ausgeführt, dass das Mittel zur Reinigung des Verteilerbodens in der Strömung des Gases eine zur Erzielung der Reinigungswirkung ausreichende Bewegungsenergie aufnimmt.

Nach einer besonderen Ausführungsform der erfindungsgemäßen Vorrichtung handelt es sich bei dem Mittel zur Reinigung des Verteilerbodens um ein Seil und/oder eine Kette und/oder einen beweglich gelagerten, mit einer Kette und/oder einem Seil befestigten Stab.

Nach einer besonderen Ausführungsform der erfindungsgemäßen Vorrichtung ist das Mittel zur Reinigung des Verteilerbodens am Verteilerboden, insbesondere in zumindest einer der Düsen des Verteilerbodens, angeordnet.

Nach einer besonderen Ausführungsform der erfindungsgemäßen Vorrichtung ist die Reinigungseinrichtung für zumindest eine Düse vorhanden und kann in der Düse und/oder am Verteilerboden und/oder an einer anderen Stelle des Wirbelbettaggregates befestigt sein.

Nach einer besonderen Ausführungsform der erfindungsgemäßen Vorrichtung ist die Reinigungseinrichtung neben und/oder in und/oder oberhalb und/oder unterhalb der Düse befestigt.

Nach einer besonderen Ausführungsform ist die Erfindung durch einen Düsenverteilerboden zur Verteilung eines mit feinen Feststoffpartikeln beladenen Gases, vorzugsweise zur Verwendung in einem Wirbelbettaggregat zur Reduktion von metalloxidhältigen Feststoffpartikeln, gekennzeichnet, wobei an dem Düsenverteilerboden zumindest eine bewegliche Reinigungseinrichtung angebracht ist, die es ermöglicht, die Bildung von Ablagerungen in den Düsen und/oder an dem Verteilerboden zu verringern und/oder bereits gebildete Anlagerungen zumindest teilweise zu entfernen, wobei es sich es sich bei der Reinigungseinrichtung um ein Seil und/oder eine Kette und/oder einen beweglich gelagerten Stab handelt, die beispielsweise am Düsenverteilerboden und/oder in der Düse selbst, für zumindest eine der Düsen, angeordnet sind.

Die Erfindung ist weiters durch ein Verfahren nach Anspruch 5 gekennzeichnet.

Nach einer besonderen Ausführungsform des erfindungsgemäßen Verfahrens wird der Reinigungseinrichtung durch die Strömung des Gases eine zur Erzielung der Reinigungswirkung ausreichende Bewegungsenergie zugeführt.

Nach einer besonderen Ausführungsform des erfindungsgemäßen Verfahrens wird der Düsenverteilerboden durch die Reinigungseinrichtung in Schwingung versetzt.

Nach einer besonderen Ausführungsform des erfindungsgemäßen Verfahrens wird die Reinigungseinrichtung zumindest teilweise in zumindest einer der Düsen des Verteilerbodens angeordnet, insbesondere befestigt.

Düsen von Gasverteilerböden, wie beispielsweise in der Wirbelschichttechnik eingesetzt, die mit einem staubbeladenem Gas angeströmt werden, neigen durch Anbacken des mit dem Gas mitgeführten Staubes zum Verstopfen. Dies bedingt einen hohen Wartungsaufwand zur Reinigung der Düsen.

Nach einer besonderen Ausführungsform der Erfindung werden deshalb eine oder mehrere Ketten, Seile oder beweglich gelagerte, beispielsweise mit einer Kette und/oder einem Seil befestigte, Stäbe oder ähnliche Gegenstände in der Düse und/oder oberhalb der Düse und/oder unterhalb der Düse und/oder neben der Düse befestigt. Die Gegenstände werden durch die Turbulenz des strömenden Gases in Bewegung versetzt und schlagen anhaftende Partikel von den Düsen ab bzw. versetzen die Düsen in Schwingungen, sodass anhaftende Partikel abplatzen und/oder die Bildung von Anbackungen verringert wird.

Verschiedene Ausführungsformen des Erfindungsgegenstandes sind anhand mehrerer nicht-einschränkender und schematischer Zeichnungen dargestellt. Es zeigen:
- Fig. 1: eine shematische Darstellung eines Düsenverteilerbodens
- Fig. 2: ein Wirbelschichtaggregat mit einem Düsenverteilerboden
- Fig. 3: verschiedene weitere Ausführungen zur Ausführung eines erfindungsgemäßen Verteilerbodens

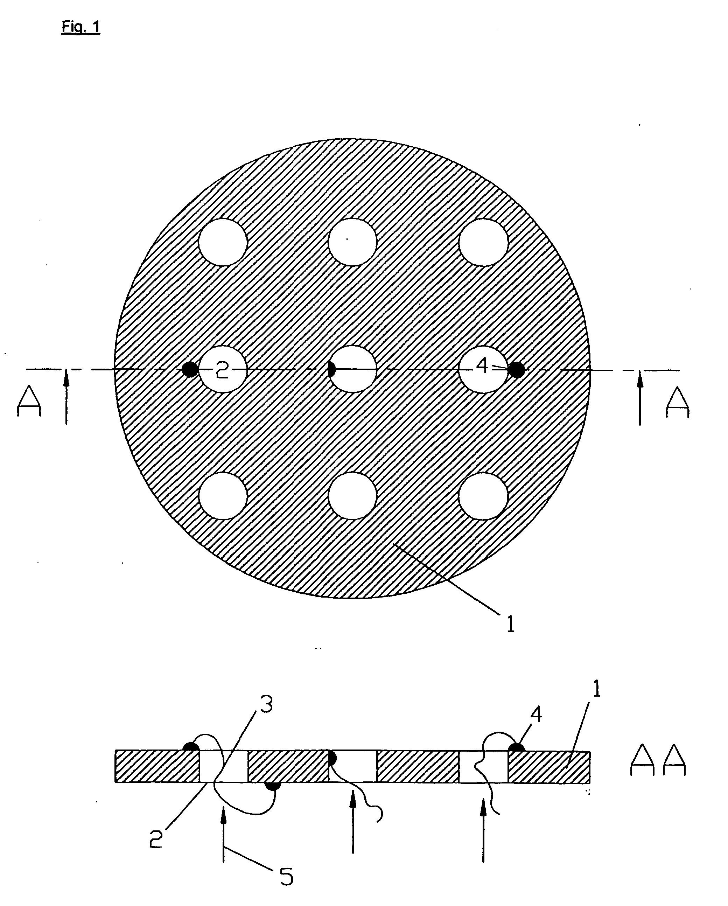

Nach Fig. 1 ist ein Düsenverteilerboden 1 dargestellt, der eine Anzahl von Düsen 2 aufweist. An dem Düsenverteilerboden sind Reinigungseinrichtungen, insbesondere Ketten 3, angebracht, die an geeigneten Befestigungen 4 an dem Düsenverteilerboden fixiert sind. Durch die Strömung 5 werden die Ketten 3 bewegt, und schlagen in der Folge gegen den Düsenverteilerboden 1, bzw. gegen die Düsen 2. Durch diese mechanische Beanspruchung werden Anbackungen an dem Düsenverteilerboden 1 entfernt. Nach einer zusätzlichen Ausführungsform der Erfindung wird der Düsenverteilerboden durch die Reinigungseinrichtungen in Schwingung versetzt, wodurch die Bildung von Anbackungen weiter verringert wird. Der Einfachheit halber sind in Fig. 1 nur an ausgewählten Düsen Reinigungseinrichtungen dargestellt. Die Befestigung der Reinigungseinrichtung an dem Düsenverteilerboden kann beliebig erfolgen.

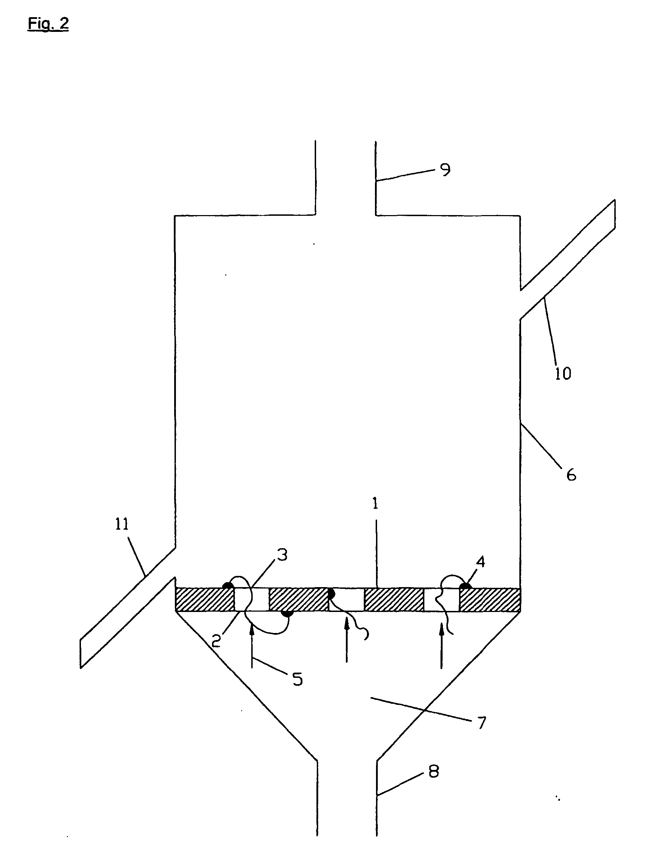

In Fig. 2 ist wiederum der Düsenverteilerboden 1 dargestellt, der in ein Wirbelbettaggregat 6, beispielsweise zur Reduktion von feinteilchemförmigen Eisenerz. Unterhalb des Düsenverteilerbodens 1 befindet sich eine Windkammer 7, durch welche das Reaktionsgas über eine Gaszuleitung 8 eingeleitet wird. Nach der Reaktion in der Reaktionskammer wird das Gas über eine Ableitung 9 wiederum aus dem Wirbelbettaggregat abgeleitet Dem Wirbelbettaggregat wird weiters über eine Zuleitung 10 das feststoffförmige Einsatzmaterial zugeleitet, das über eine Ableitung 11 wiederum abgeleitet wird.

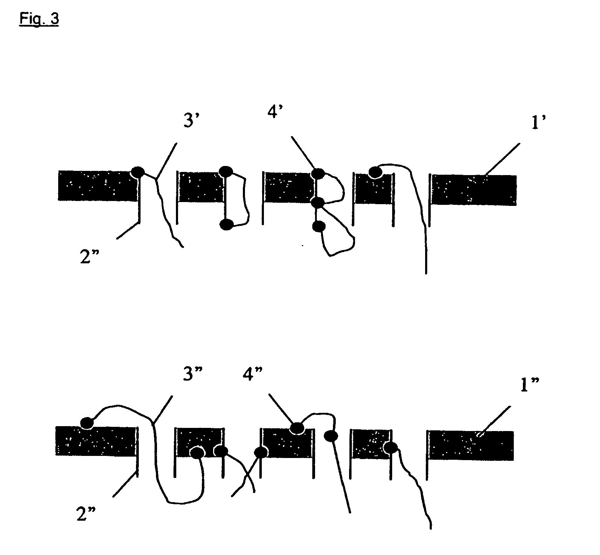

In Fig. 3 sind schfießlich verschiedene weitere Ausführungsbeispiele zur Ausführung von Verteilerböden ersichtlich, die noch zusätzlich kombiniert werden können.

Im Detail sind verschiedene Arten der Anbringung, insbesondere Befestigung 4' bzw. 4", von Mitteln 3' bzw. 3" zur Reinigung eines Verteilerbodens an einem Verteilerboden 1' bzw. 1" insbesondere an den Düsen 2' bzw. 2", eines Verteilerbodens gezeigt.

## Patentansprüche

1. Verteilerboden (1), insbesondere Düsenverteilerboden, zur Verteilung eines mit feinen Feststoffpartikeln beladenen Gases, vorzugsweise zur Verwendung in einem Wirbelbettaggregat zur Reduktion von metalloxidhältigen Feststoffpartikeln, wobei an dem Verteilerboden (1) zumindest eine bewegliche Reinigungseinrichtung angeordnet ist, die es ermöglicht, während des Betriebes des Verteilerbodens die Bildung von Ablagerungen an dem Verteilerboden, insbesondere an den Düsen (2) des Düsenverteilerbodens, zu verringern und/ oder bereits gebildete Anlagerungen zumindest teilweise zu entfernen, **dadurch gekennzeichnet, dass** die Reinigungseinrichtung ein Mittel (3) zur Reinigung des Verteilerbodens und dessen Öffnungen durch eine unmittelbare mechanische, schlagende Einwirkung auf den Verteilerboden und dessen Öffnungen, insbesondere auf die Düsen des Düsenverteilerbodens, aufweist.

2. Verteilerboden nach Anspruch 1, **dadurch gekennzeichnet, dass** das Mittel (3) zur Reinigung des Verteilerbodens derart ausgeführt ist, dass das Mittel zur Reinigung des Verteiterbodens in der Strömung des Gases eine zur Erzielung der Reinigungswirkung ausreichende Bewegungsenergie aufnimmt.

3. Verteilerboden nach Anspruch 1 oder 2, **dadurch gekennzeichnet, dass** es sich bei dem Mittel (3) zur Reinigung des Verteilerbodens um ein Seil und/oder eine Kette und/oder einen beweglich gelagerten, mit einer Kette und/oder einem Seil befestigten Stab handelt.

4. Verteilerboden nach einem oder mehreren der Ansprüche 1 bis 3, **dadurch gekennzeichnet, dass** das Mittel (3) zur Reinigung des Verteilerbodens am Verteilerboden, insbesondere in zumindest einer der Düsen des Verteilerbodens, angeordnet ist.

5. Verfahren zur Verringerung der Bildung von Anlagerungen und/oder zur zumindest teilweisen Entfernung von Anlagerungen an einem Verteilerboden und/ oder an den Düsen eines Düsenverteilerbodens, wobei an dem Verteilerboden zumindest eine bewegliche Reinigungseinrichtung betrieben wird, **dadurch gekennzeichnet, dass** während des Betriebes des Verteilerbodens eine Reinigung des Verteilerbodens durch eine unmittelbare mechanische, schlagende, Einwirkung der Reinigungseinrichtung auf den Verteilerboden und dessen Öffnungen, insbesondere auf die Düsen eines Düsenverteilerbodens, bzw. auf die entsprechenden Anlagerungen an dieser Stelle durchgeführt wird.

6. Verfahren nach Anspruch 5, **dadurch gekennzeichnet, dass** der Reinigungseinrichtung durch die Strömung des Gases eine zur Erzielung der Reinigungswirkung ausreichende Bewegungsenergie zugeführt wird.

7. Verfahren nach Anspruch 5 oder 6, **dadurch gekennzeichnet, dass** der Düsenverteiterboden durch die Reinigungseinrichtung in Schwingung versetzt wird.

8. Verfahren nach einem oder mehreren der Ansprüche 5 bis 7, **dadurch gekennzeichnet, dass** die Reinigungseinrichtung zumindest teilweise in zumindest einer der Düsen des Verteilerbodens angeordnet, insbesondere befestigt, wird.

## Claims

1. Distributor base (1), in particular nozzle distributor base, for distributing a gas which is laden with fine solids particles, preferably for use in a fluidized-bed unit, in particular for the reduction of metal oxide-containing solids particles, at least one movable cleaning device being arranged on the distributor base (1), which makes it possible to reduce the formation of deposits on the distributor base, in particular on the nozzles (2) of a nozzle distributor base, while the distributor base is operating and/or to at least partially remove deposits which have already formed, **characterized in that** the cleaning device has a means (3) for cleaning the distributor base by means of a direct mechanical, in particular striking, action on the distributor base, in particular on the nozzles of a nozzle distributor base.

2. Distributor base according to Claim 1, **characterized in that** the means (3) for cleaning the distributor base is designed in such a manner that the means for cleaning the distributor base absorbs a kinetic energy which is sufficient to achieve the cleaning action in the flow of the gas.

3. Distributor base according to Claim 1 or 2, **characterized in that** the means (3) for cleaning the distributor base is a rope and/or a chain and/or a movably mounted rod attached by a chain and/or a rope.

4. Distributor base according to one or more of Claims 1 to 3, **characterized in that** the means (3) for cleaning the distributor base is arranged on the distributor base, in particular in at least one of the nozzles of the distributor base.

5. Method for reducing the formation of deposits and/or for at least partially removing deposits on a distributor base, in particular on the nozzles of a nozzle distributor base, in which at least one movable cleaning device is operated on the distributor base, **characterized in that** while the distributor base is operating, the distributor base is cleaned by a direct, mechanical, in particular striking action of the cleaning device on the distributor base, in particular on the nozzles of a nozzle distributor base, or on the corresponding deposits at this location.

6. Method according to Claim 5, **characterized in that** the cleaning device is supplied with sufficient kinetic energy to achieve the cleaning action by the flow of the gas.

7. Method according to Claim 5 or 6, **characterized in that** the nozzle distributor base is made to vibrate by the cleaning device.

8. Method according to one or more of Claims 5 to 7, **characterized in that** the cleaning device is at least partially arranged, in particular secured, in at least one of the nozzles of the distributor base.

## Revendications

1. Fond de distributeur (1), notamment fond de distributeur à buses, pour distribuer un gaz chargé de fines particules solides, de préférence pour l'utilisation dans une unité à lit fluidisé, pour la réduction de particules solides contenant des oxydes métalliques, où, au fond du distributeur (1), est disposé au moins un dispositif de nettoyage mobile qui permet, pendant le fonctionnement du fond de distributeur, de réduire la formation de dépôts sur le fond de distributeur, notamment sur les buses (2) du fond de distributeur à buses, et/ou d'éliminer au moins partiellement les dépôts déjà formés, **caractérisé en ce que** le dispositif de nettoyage présente un moyen (3) pour nettoyer le fond de distributeur et ses ouvertures par un effet direct mécanique de frappe sur le fond de distributeur et ses ouvertures, notamment sur les buses du fond de distributeur à buses.

2. Fond de distributeur selon la revendication 1, **caractérisé en ce que** le moyen (3) pour nettoyer le fond de distributeur est réalisé de telle sorte que le moyen pour nettoyer le fond de distributeur reçoive dans l'écoulement de gaz une énergie de mouvement suffisante pour produire l'effet de nettoyage.

3. Fond de distributeur selon la revendication 1 ou 2, **caractérisé en ce que** le moyen (3) pour nettoyer le fond de distributeur est un câble et/ou une chaîne et/ou une barre montée mobile, fixée avec une chaîne et/ou un câble.

4. Fond de distributeur selon l'une quelconque ou plusieurs des revendications 1 à 3, **caractérisé en ce que** le moyen (3) pour nettoyer le fond de distributeur est disposé sur le fond de distributeur, notamment dans au moins l'une des buses du fond de distributeur.

5. Procédé pour réduire la formation de dépôts et/ou pour au moins éliminer partiellement les dépôts sur un fond de distributeur et/ou sur les buses d'un fond de distributeur à buses, où, sur le fond de distributeur, on fait fonctionner au moins un dispositif de nettoyage mobile, **caractérisé en ce que** pendant le fonctionnement du fond de distributeur, un nettoyage du fond de distributeur est effectué par un effet direct mécanique de frappe du dispositif de nettoyage sur le fond de distributeur et ses ouvertures, notamment sur les buses d'un fond de distributeur à buses, respectivement sur les dépôts correspondants à cet endroit.

6. Procédé selon la revendication 5, **caractérisé en ce que** le dispositif de nettoyage est alimenté par l'écoulement de gaz en une énergie de mouvement suffisante pour produire l'effet de nettoyage.

7. Procédé selon la revendication 5 ou 6, **caractérisé en ce que** le fond de distributeur à buses est mis à osciller par le dispositif de nettoyage.

8. Procédé selon l'une quelconque ou plusieurs des revendications 5 à 7, **caractérisé en ce que** le dispositif de nettoyage est disposé, notamment fixé, au moins partiellement dans au moins l'une des buses du fond de distributeur.
